(19) Europäisches Patentamt
European Patent Office
Office européen des brevets

(11) EP 4 601 041 A1

(12) **EUROPEAN PATENT APPLICATION**
published in accordance with Art. 153(4) EPC

(43) Date of publication:
**13.08.2025 Bulletin 2025/33**

(21) Application number: **23875260.4**

(22) Date of filing: **06.10.2023**

(51) International Patent Classification (IPC):
***H01M 4/62*** (2006.01) ***H01M 4/587*** (2010.01)
***H01M 4/583*** (2010.01) ***H01M 10/0525*** (2010.01)
***C08L 33/02*** (2006.01) ***C08L 33/06*** (2006.01)
***C08L 33/26*** (2006.01) ***C08L 39/06*** (2006.01)
***C08L 53/00*** (2006.01) ***H01M 4/02*** (2006.01)

(52) Cooperative Patent Classification (CPC):
**C08L 33/02; C08L 33/06; C08L 33/26; C08L 39/06; C08L 53/00; H01M 4/02; H01M 4/583; H01M 4/587; H01M 4/62; H01M 10/0525;** Y02E 60/10

(86) International application number:
**PCT/KR2023/015412**

(87) International publication number:
**WO 2024/076199 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.10.2022 KR 20220127868**

(71) Applicant: **Hansol Chemical Co., Ltd**
**Seoul 06169 (KR)**

(72) Inventors:
- **GWON, Hyeon-Ji**
**Wanju-gun, Jeollabuk-do 55321 (KR)**
- **PARK, Ji-Hye**
**Wanju-gun, Jeollabuk-do 55321 (KR)**
- **PARK, So-Hyun**
**Wanju-gun, Jeollabuk-do 55321 (KR)**
- **PARK, Chan-Su**
**Wanju-gun, Jeollabuk-do 55321 (KR)**
- **KIM, Gyun-Tae**
**Wanju-gun, Jeollabuk-do 55321 (KR)**
- **CHO, Min-Ki**
**Wanju-gun, Jeollabuk-do 55321 (KR)**
- **KIM, Chang-Beom**
**Wanju-gun, Jeollabuk-do 55321 (KR)**
- **KWON, Se-Man**
**Wanju-gun, Jeollabuk-do 55321 (KR)**

(74) Representative: **Ipsilon Lyon**
**Le Contemporain**
**50 Chemin de la Bruyère**
**69574 Dardilly Cedex (FR)**

# (54) BINDER COMPRISING COPOLYMER COMPOSITION, NEGATIVE ELECTRODE FOR SECONDARY BATTERY COMPRISING SAME BINDER, AND SECONDARY BATTERY COMPRISING SAME NEGATIVE ELECTRODE

(57) The present invention relates to: a copolymer composition comprising a first copolymer comprising an acrylic acid-based monomer unit and an acrylamide-based monomer unit, and a second copolymer comprising a vinyl pyrrolidone-based unit, an acrylate-based monomer unit comprising a hydroxyl group, and an acrylamide-based monomer unit; and a negative electrode slurry, a negative electrode, and a secondary battery comprising the copolymer composition.

EP 4 601 041 A1

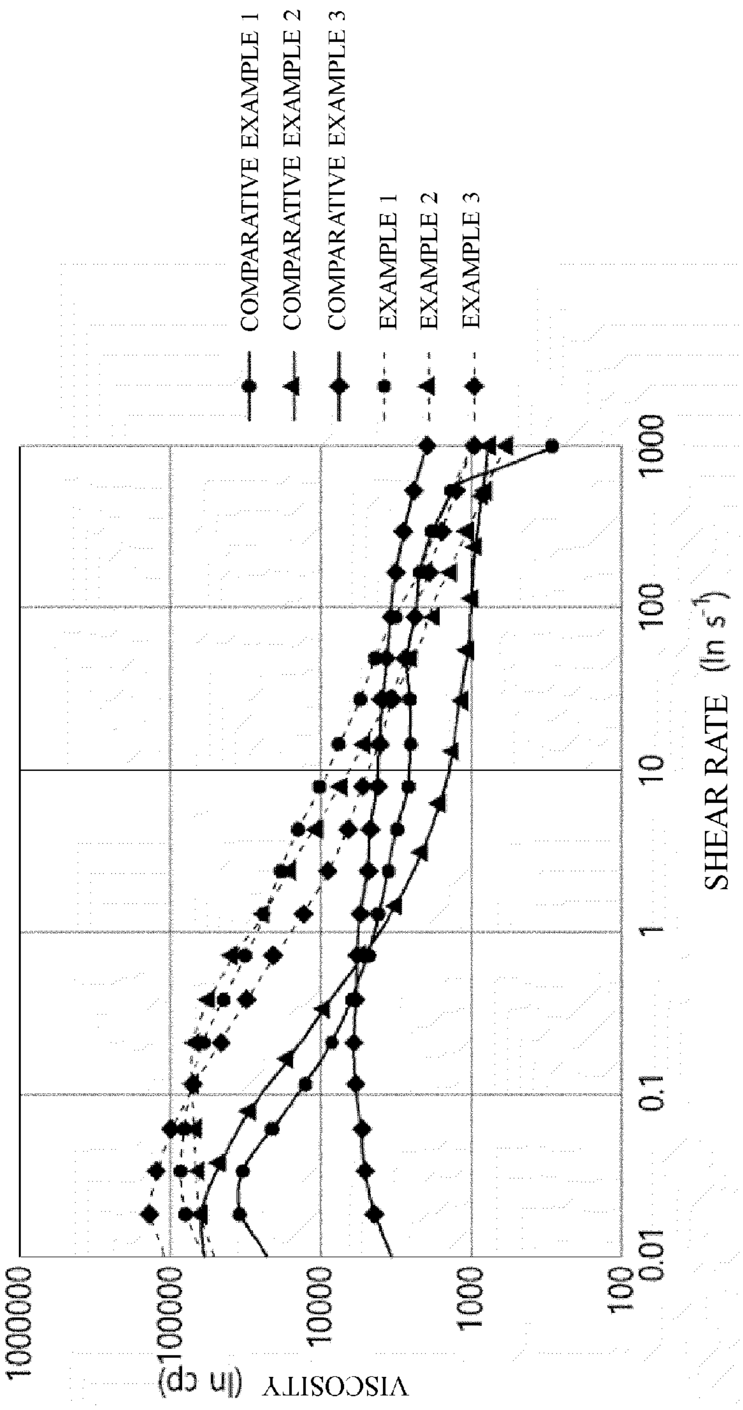
COMPARATIVE EXAMPLE 1
COMPARATIVE EXAMPLE 2
COMPARATIVE EXAMPLE 3
EXAMPLE 1
EXAMPLE 2
EXAMPLE 3
VISCOSITY (In cp)
1000000
100000
10000
1000
100
0.01
0.1
1
10
100
1000
SHEAR RATE (In s-1)

FIG. 1

## Description

### Technical Field

The present disclosure relates to a copolymer composition usable as a binder, a slurry including the same, an electrode, and a secondary battery.

### Background Art

With high energy density, lithium secondary batteries are being used extensively in the fields of electrical, electronic, telecommunication, and computer industries. In addition, application fields of lithium secondary batteries are being expanded to high-capacity secondary batteries for hybrid vehicles, electric vehicles, and the like, in addition to small lithium secondary batteries for portable electronic devices.
As such application fields expand, lithium secondary batteries are required to have longer life characteristics as well as higher capacity. One example of a method for making the capacity of lithium secondary batteries higher may involve using silicon atom-containing active materials in a negative electrode.
The application of silicon atom-containing active materials, which involves intercalation and deintercalation of a higher amount of lithium than existing carbon-based active materials, may lead to the expectation of improved battery capacity. However, in the case of such silicon-containing active materials, the intercalation and deintercalation of lithium involve considerable volume changes. For this reason, negative electrode active material layers expand and contract significantly during charging and discharging.
As a result, there have been the following problems: deterioration in conductivity between negative electrode active materials, blockage of a conductive path between negative electrode active materials and a current collector, and degradation of secondary battery cycling performance.
However, various existing binders that have been developed (such as polyacrylic acid (PAA), PAA/carboxymethyl cellulose (CMC), Na-PAA, cross-linked PAA, alginate, and polyvinylalcohol (PVA)) lack adhesive strength or lack durability due to extremely brittle electrodes, meaning that such a problem described above regarding volume expansion is challenging to resolve under current circumstances.
Therefore, a binder enabling the capacity retention rate of secondary batteries to be obtainable by addressing these problems is required.

[Document of related art]

[Patent Document]

(Patent Document 1) Korean Patent Application Publication No. 10-2016-0024921

### Disclosure

### Technical Problem

Accordingly, the present disclosure aims to provide a copolymer composition having excellent flexibility.
In addition, the present disclosure aims to provide a slurry composition having improved coating properties and rheological properties and an excellent ability to suppress electrode expansion, using the copolymer composition.
Furthermore, the present disclosure aims to provide an electrode (especially a negative electrode) having excellent performance, the electrode to which the slurry composition is applied, and a secondary battery having excellent life characteristics (excellent capacity retention rate per cycle), the secondary battery including the electrode.
However, the problems to be solved by the present application are not limited to the above description, and other problems can be clearly understood by those skilled in the art from the following description.

### Technical Solution

In one aspect of the present application, a copolymer composition including: a first copolymer including an acrylic acid-based monomer unit and an acrylamide-based monomer unit; and

a second copolymer including a vinyl pyrrolidone-based unit, an acrylate-based monomer unit containing a hydroxyl group, and an acrylamide-based monomer unit,
is provided.

In another aspect of the present application, a negative electrode slurry including: the copolymer composition; and

a negative electrode active material,
is provided.

In a further aspect of the present application, a negative electrode including: a current collector; and

a negative electrode active material layer including the copolymer composition, the negative electrode active material layer formed on the current collector,
is provided.

In yet another aspect of the present application,

a secondary battery including the negative electrode
is provided.

**Advantageous Effects**

A copolymer composition of the present disclosure has excellent flexibility, thus improving the coating properties and rheological properties of a negative electrode slurry composition, and can suppress negative electrode expansion, resulting in improved secondary battery life.

**Description of Drawings**

FIG. 1 is a graph showing viscosity changes as a function of shear rates of negative electrode slurries of Examples 1 to 3 and Comparative Examples 1 to 3 of the present disclosure.

**Best Mode**

Hereinafter, the action and effect of the present disclosure will be described in more detail through specific embodiments of the present disclosure. However, these embodiments are provided only for illustrative purposes of the present disclosure, and the scope of the present disclosure is not limited thereby.
All terms or words used in the specification and the appended claims should not be construed as being limited to general and dictionary meanings but will be interpreted based on the meanings and concepts corresponding to the technical ideas of the present disclosure on the basis of the principle that any inventor is allowed to define the concepts of terms as appropriate to describe the disclosure thereof in the best mode.
Therefore, the embodiments described herein are configured merely as one of the most preferable examples of the present disclosure and do not exhaustively present the technical idea of the present disclosure. Accordingly, it should be appreciated that there may be various equivalents and modifications that can replace the embodiments as of the filing date of the present disclosure.
As used herein, the singular forms are intended to include the plural forms as well, unless the context clearly indicates otherwise. It will be further understood that the terms "comprise", "include", "have", and the like when used herein, specify the presence of stated features, integers, steps, components, or combinations thereof but do not preclude the presence or addition of one or more other features, integers, steps, components, or combinations thereof.
As used herein, the expression "a to b" to represent a numerical range is defined as $\geq$ a and $\leq$ b.
A copolymer composition, according to one aspect of the present application, may include: a first copolymer including an acrylic acid-based monomer unit and an acrylamide-based monomer unit; and a second copolymer including a vinyl pyrrolidone-based unit, an acrylate-based monomer unit containing a hydroxyl group, and an acrylamide-based monomer unit.
The first copolymer and the second copolymer may be more flexible than existing acrylic acid-based homopolymers and may be introduced as a two-component system to form a tertiary network within an electrode when preparing an electrode slurry.
When manufacturing the electrode, covalent bonds and/or hydrogen bonds may be formed between the first copolymer and the second copolymer within the electrode during an electrode drying step. In addition, the interaction with silicon serving as a negative electrode active material enables the suppression of silicon expansion and the extension of secondary battery life.
In other words, the tertiary network may be formed by cross-links through the covalent bonds and/or hydrogen

bonds between the first copolymer and the second copolymer.

Specifically, through the acrylic acid-based monomer unit, the first copolymer is allowed to contain a large amount of carboxyl groups, thus reacting effectively with silicon, and is rigid, thus effectively suppressing silicon expansion. In addition, through the acrylamide-based monomer unit, the electrode can remain heat-resistant, and the interaction with the surface of silicon particles, the negative electrode active material, is enabled.

In the meantime, the second copolymer can reduce the rigidity and electrical resistance of the electrode through the vinyl pyrrolidone-based unit, which exhibits a relatively high glass transition temperature.

In addition, through the acrylate-based monomer unit containing the hydroxyl group, which exhibits a relatively low glass transition temperature, the second copolymer can increase copolymer flexibility while forming covalent bonds and/or hydrogen bonds within the electrode. Furthermore, through the acrylamide-based monomer unit, the electrode can remain heat-resistant, and the interaction with the surface of silicon particles, the negative electrode active material, is enabled.

In one embodiment, the acrylic acid-based monomer unit of the first copolymer may be formed by polymerizing acrylic acid monomers, methacrylic acid monomers, or combinations thereof, and the acrylamide-based monomer unit of the first copolymer may be formed by polymerizing acrylamide monomers, methacrylamide monomers, or combinations thereof.

In the meantime, the acrylate-based monomer unit containing the hydroxyl group of the second copolymer may be formed by polymerizing 2-hydroxyethyl acrylate monomers, 2-hydroxyethyl methacrylate monomers, or combinations thereof, and the acrylamide-based monomer unit of the second copolymer may be formed by polymerizing acrylamide monomers, methacrylamide monomers, or combinations thereof.

In other words, the acrylate-based monomer unit containing the hydroxyl group of the second copolymer may be formed by polymerizing hydroxyl group-containing acrylates, hydroxyl group-containing methacrylates, or combinations thereof.

In addition, the vinyl pyrrolidone-based unit of the second copolymer may be formed by polymerizing vinyl pyrrolidone monomers.

For example, the first copolymer may be formed by polymerizing the acrylic acid monomers, the methacrylic acid monomers, and the acrylamide monomers through copolymerization.

In addition, the second copolymer may be formed by polymerizing the acrylamide monomers, the hydroxyethyl acrylate monomers, and the vinyl pyrrolidone monomers through copolymerization.

In the meantime, the carboxylate group in the acrylic acid-based monomer unit of the first copolymer may be bonded to an alkali metal.

In the meantime, a weight ratio of the alkali metal to the copolymer (weight of one or more selected from the group consisting of the alkali metal and an alkali metal-containing acetate salt compound:weight of the copolymer) may be in the range of 0.1 to 15:100.

For example, the weight ratio of the alkali metal to the copolymer may be in the range of 1 to 10:100.

The alkali metal may, for example, be Li, Na, or K.

In one embodiment, the first copolymer may include 75 wt% or more and 95 wt% or less of the acrylic acid-based monomer unit and 5 wt% or more and 25 wt% or less of the acrylamide-based monomer unit, based on 100 wt% of the total weight of the first copolymer.

For example, the first copolymer may be prepared by polymerizing 70 wt% of acrylic acid, 10 wt% of methacrylic acid, and 20 wt% of acrylamide, based on 100 wt% of the total weight of the first copolymer, through copolymerization.

When the content of the acrylic acid-based monomer unit exceeds the aforementioned range, the flexibility may be reduced. In other words, the copolymer may be more brittle, resulting in poorer coating properties or heat resistance when applied to the electrode.

In addition, when the content of the acrylamide-based monomer unit falls short of the aforementioned range, the flexibility may be reduced, and heat resistance may become poor when applied to the electrode.

In one embodiment, the second copolymer may include 30 wt% or more and 50 wt% or less of the vinyl pyrrolidone-based monomer unit, 30 wt% or more and 50 wt% or less of the acrylate-based monomer unit containing the hydroxyl group, and 10 wt% or more and 30 wt% or less of the acrylamide-based monomer unit, based on 100 wt% of the total weight of the second copolymer.

For example, the second copolymer may include 40 wt% of the vinyl pyrrolidone-based monomer unit, 40 wt% of the acrylate-based monomer unit containing the hydroxyl group, and 20 wt% of the acrylamide-based monomer unit, based on 100 wt% of the total weight of the second copolymer.

When the content of the vinyl pyrrolidone-based monomer unit falls short of the aforementioned range, the resistance properties of a battery may be deteriorated.

In addition, when the content of the acrylate-based monomer unit containing the hydroxyl group falls short of the aforementioned range, and/or the content of the acrylamide-based monomer unit falls short of the aforementioned range, the adhesive strength may be reduced.

In one embodiment, the acrylic acid-based monomer unit of the first copolymer may be formed by polymerizing the acrylic acid monomers and the methacrylic acid monomers in a weight ratio (weight of the acrylic acid monomers:weight of the methacrylic acid monomers) in the range of 2 to 10: 1.

When the weight ratio of the acrylic acid monomers to the methacrylic acid monomers in the acrylic acid-based monomer unit of the first copolymer exceeds or falls short of the aforementioned range, the copolymer may be more brittle, resulting in lower rigidity.

In one embodiment, the first copolymer may include a monomer repeating unit represented by Formula 1 below, and the second copolymer may include a monomer repeating unit represented by Formula 2 below.

[Formula 1]

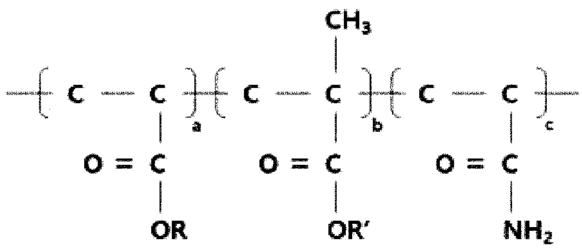

In Formula 1, R and R' are each independently hydrogen, an alkali metal, or a combination thereof, and

$$a + b + c = 1.$$

[Formula 2]

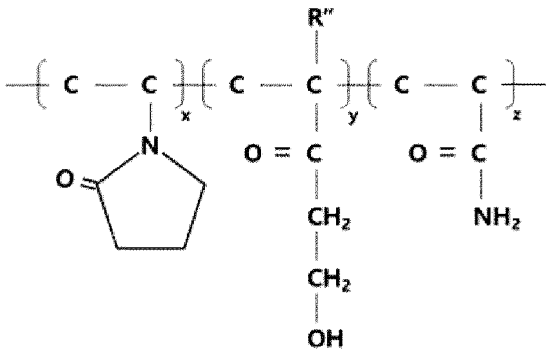

In Formula 2, R" is hydrogen, methyl, or a combination thereof, and

$$x + y + z = 1.$$

In Formula 1, a, b, and c correspond to the weight fractions of the respective monomer units, and the sum of the weight fractions of the respective monomer units is 1.

Furthermore, in Formula 2, x, y, and z correspond to the weight fractions of the respective monomer units, and the sum of the weight fractions of the respective monomer units is 1.

In one embodiment, the copolymer composition, based on 100 wt% of the total weight thereof, may include 10 wt% or more and 90 wt% or less of the first copolymer and 10 wt% or more and 90 wt% or less of the second copolymer.

For example, the copolymer composition, based on 100 wt% of the total weight thereof, may include 20 wt% or more and 80 wt% or less of the first copolymer and 20 wt% or more and 80 wt% or less of the second copolymer.

When the first copolymer content and the second copolymer content exceed or fall short of the aforementioned range, the viscosity may decrease, resulting in deterioration of the stability, or the electrode expansion rate may be increased, leading to degradation of battery life characteristics.

In the meantime, the higher the proportion of the first copolymer content within the content ranges of the first copolymer and the second copolymer of the copolymer composition, the better the effect of suppressing electrode

expansion when used as a binder, and the better the secondary battery life characteristics.

In one embodiment, the first copolymer may be a random or block copolymer, and the second copolymer may be a random or block copolymer.

In one embodiment, the first copolymer may have a weight average molecular weight of 10,000 or more and 1,000,000 or less, and the second copolymer may have a weight average molecular weight of 10,000 or more and 1,000,000 or less.

A negative electrode slurry, according to another aspect of the present application, may include the above copolymer composition and a negative electrode active material.

In other words, the copolymer composition may be used as a binder for a negative electrode and may, in particular, be an aqueous binder.

The negative electrode slurry may involve the use of distilled water serving as a solvent and include 6 wt% of the copolymers. In addition, the solid content in the slurry may be in the range of 48 wt% to 58 wt%. Furthermore, the negative electrode slurry may have a viscosity of 10,000 cp or more and 50,000 cp or less at a shear rate of 1 $s^{-1}$ and of 4,000 cp or more and 10,000 cp or less at a shear rate of 10 $s^{-1}$, measured under a measurement temperature condition of 25°C.

The negative electrode active material may be one selected from the group consisting of carbon-based materials, silicon, alkali metals, alkaline earth metals, elements of group 13, elements of group 14, transition metals, and rare-earth elements, or may be a compound including one or more selected from the above group. Preferably, the negative electrode active material is silicon or a silicon-containing compound.

Examples of the carbon-based materials may include synthetic graphite, natural graphite, hard carbon, soft carbon, and the like, but are not limited thereto. The negative electrode active material containing silicon is not particularly limited in types as long as it is silicon or a silicon-containing compound. However, the silicon-containing negative electrode active material is preferably one or more selected from the group consisting of Si, $SiO_x$ (where $0 < x < 2$), Si-Y alloys (where Y is an alkali metal, an alkaline earth metal, an element of group 13, an element of group 14, a transition metal, a rare-earth metal, or a combination thereof, but not Si), and Si-C composites.

In addition, when using a mixture of the silicon-containing negative electrode active material and other negative electrode active materials as the negative electrode active material, the silicon-containing negative electrode active material may be contained in an amount corresponding to 8 wt% or more of the total weight of the negative electrode active material.

A negative electrode active material layer, based on the total weight thereof, may include 50 wt% to 98 wt% of the negative electrode active material.

When the amount of the negative electrode active material included is less than 50 wt%, the energy density may decrease, making it impossible to manufacture a battery with high energy density. When the amount of the negative electrode active material included exceeds 98 wt%, the contents of a conductive additive and the binder may be lower, resulting in poorer electrical conductivity. In addition, the adhesive strength between the electrode active material layer and a current collector may decrease.

On the other hand, the negative electrode slurry, based on the total weight thereof, may include 1 wt% to 35 wt% of the copolymer composition of the present application, serving as the binder. When the amount of the copolymers is less than 1 wt%, the physical properties of the negative electrode may deteriorate, eliminating the negative electrode active material and the conductive additive. When the amount of the copolymers exceeds 35 wt%, the proportions of the negative electrode active material and the conductive additive may relatively decrease, resulting in reduced battery capacity. In addition, the electrical conductivity of the negative electrode may become poor.

In addition, the negative electrode slurry may further include a polymer in addition to the copolymer composition of the present application. Specifically, examples of the polymer may include polyvinylidenefluoride (PVDF), PVA, PAA, PAA metal salts (Metal-PAA), polymethacrylic acid (PMA), polymethylmethacrylate (PMMA), polyacrylamide (PAM), polymethacrylamide, polyacrylonitrile (PAN), polymethacrylonitrile, polyimide (PI), chitosan, starch, polyvinylpyrrolidone, tetrafluoroethylene, polyethylene, polypropylene, ethylene-propylene-diene polymers (EPDMs), sulfonated-EPDMs, styrene-butadiene rubber (SBR), fluoroelastomers, hydroxypropylcellulose, regenerated cellulose, various copolymers thereof, and the like, but are not limited thereto.

A negative electrode, according to a further aspect of the present application, may include a current collector and a negative electrode active material layer including the above copolymer composition of the present application, the negative electrode active material layer formed on the current collector.

The negative electrode active material layer may further include a conductive additive. The conductive additive is used to further improve the conductivity of the negative electrode active material. Any conductive additive that is conductive while not causing chemical changes in batteries in the art to which the present disclosure pertains may be used without particular limitations. Examples of the conductive additive used may include: graphite, such as natural graphite and synthetic graphite; carbon black, such as carbon black, acetylene black, Ketjen black, channel black, furnace black, lamp black, and thermal black; conductive fibers, such as carbon fibers and metal fibers; metal powders, such as carbon fluoride, aluminum, and nickel powder; conductive whiskers, such as zinc oxide and potassium titanate; conductive

metal oxides, such as titanium oxide; polyphenylene derivatives; and the like.

The negative electrode active material layer, based on the total weight thereof, may include 0.05 wt% to 30 wt%, preferably 15 wt% to 25 wt%, of the conductive additive. When the amount of the conductive additive included is less than 0.05 wt%, the electrical conductivity of the negative electrode becomes poor. When the amount of the conductive additive included exceeds 30 wt%, the proportions of the silicon-based negative electrode active material and the binder may relatively decrease, resulting in reduced battery capacity. In addition, because the content of the binder needs to be increased to keep the negative electrode active material layer, the content of the negative electrode active material decreases, making it impossible to manufacture a battery with high energy density.

In the negative electrode of the present application, the negative electrode active material layer includes the copolymer composition of the present application, thus suppressing the volume expansion of the negative electrode active material from occurring when a secondary battery is charged and discharged and improving the capacity retention rate per cycle.

The negative electrode may be manufactured by the following steps: (a) preparing a composition for forming the negative electrode active material layer, the composition including the negative electrode active material and the copolymer composition of the present application, and (b) applying the composition for forming the negative electrode active material layer on a negative electrode current collector and then drying the resulting product.

The composition for forming the negative electrode active material layer is prepared in a negative electrode slurry form. A solvent used to prepare the slurry form should be easily dried and capable of dissolving the binder, which is the copolymer composition of the present application, but those enabling the negative electrode active material to remain dispersed without being dissolved are the most preferable.

An organic solvent or water is usable as the solvent according to the present application, and an organic solvent including one or more selected from the group consisting of methylpyrrolidone, dimethylformamide, isopropylalcohol, acetonitrile, methanol, ethanol, and tetrahydrofuran is applicable as the organic solvent.

The composition for forming the negative electrode active material layer may be mixed by existing stirring methods using existing mixers, such as a latex mixer, a high-speed shear mixer, and a homomixer.

Step (b) is to manufacture the negative electrode for a lithium secondary battery by applying the composition for forming the negative electrode active material layer, prepared in Step (a), on the negative electrode current collector and then drying the resulting product.

Specifically, the negative electrode current collector may be selected from the group consisting of copper, stainless steel, titanium, silver, palladium, nickel, alloys thereof, and combinations thereof. The surface of the stainless steel may be treated with carbon, nickel, titanium, or silver, and an aluminum-cadmium alloy may be used as the alloy above. In addition, calcined carbon, a non-conductive polymer whose surface is treated with a conductive additive, a conductive polymer, or the like may be used.

The composition for forming the negative electrode active material layer, prepared in Step (a), is applied on the negative electrode current collector, and the current collector may be coated to have a suitable thickness depending on the desired thickness to be formed, which is preferably selected appropriately within the range of 10 $\mu$m to 300 $\mu$m.

In this case, there are no limitations in methods of applying the slurry-form composition for forming the negative electrode active material layer, and methods such as doctor blade coating, dip coating, gravure coating, slit die coating, spin coating, comma coating, bar coating, reverse roll coating, screen coating, and cap coating may, for example, be performed to manufacture the negative electrode.

The resulting product obtained after the application is dried to finally manufacture the negative electrode for a secondary battery (especially a lithium secondary battery) in which the negative electrode active material layer is formed.

A battery, according to yet another aspect of the present application, may include a current collector and a negative electrode in which the above negative electrode active material layer is formed on the current collector.

The battery may be a secondary battery (especially a lithium secondary battery) including a positive electrode, the negative electrode, a separator to be interposed between the positive and negative electrodes, and an electrolyte solution.

When 50 cycles of charge and discharge are repeatedly performed on the secondary battery, the capacity retention rate may be 70% or higher.

In addition, when 50 cycles of charge and discharge are repeatedly performed on the secondary battery, the electrode expansion rate may be 30% or lower.

The configurations of the positive electrode, the separator, and the electrolyte solution of the lithium secondary battery are not particularly limited in the present disclosure and follow what is known in the related art.

The positive electrode includes a positive electrode active material formed on a positive electrode current collector.

Any positive electrode current collector that is highly conductive while not causing chemical changes in batteries in the art to which the present disclosure pertains may be used without particular limitations, and examples thereof used may include stainless steel, aluminum, nickel, titanium, calcined carbon, or aluminum or stainless steel whose surface is

treated with carbon, nickel, titanium, silver, and the like. In this case, the positive electrode current collector used may have various forms, such as a sheet, a foil, a net, a porous body, a foam, a non-woven body, or a film with fine protrusions and depressions formed on the surface thereof so that the adhesive strength to the positive electrode active material can be increased.

Any positive electrode active material usable in the art to which the present disclosure pertains may be used as the positive electrode active material constituting the positive electrode active material layer. Specific examples of such positive electrode active materials may include lithium metal; a lithium cobalt-based oxide, such as $LiCoO_2$; a lithium manganese-based oxide, such as $Li_{1+x}Mn_{2-x}O_4$ (where x is in the range of 0 to 0.33), $LiMnO_3$, $LiMn_2O_3$, and $LiMnO_2$; a lithium copper oxide, such as $Li_2CuO_2$; a vanadium oxide, such as $LiV_3O_8$, $LiFe_3O_4$, $V_2O_5$, and $Cu_2V_2O_7$; a lithium nickel-based oxide represented by $LiNi_{1-x}M_xO_2$ (where M is Co, Mn, Al, Cu, Fe, Mg, B, or Ga, and x is in the range of 0.01 to 0.3); a lithium manganese composite oxide represented by $LiMn_{2-x}M_xO_2$ (where M is Co, Ni, Fe, Cr, Zn, or Ta, and x is in the range of 0.01 to 0.1) or $Li_2Mn_3MO_8$ (where M is Fe, Co, Ni, Cu, or Zn); a lithium-nickel-manganese-cobalt-based oxide represented by $Li(Ni_aCo_bMn_e)O2$ (where $0 < a < 1$, $0 < b < 1$, $0 < c < 1$, and $a + b + c = 1$); sulfur or a disulfide compound; a phosphate, such as $LiFePO_4$, $LiMnPO_4$, $LiCoPO_4$, and $LiNiPO_4$; $Fe_2(MoO_4)_3$; and the like, but are not limited thereto.

In this case, the positive electrode active material layer may further include a binder, a conductive additive, a filler, and other additives, in addition to the positive electrode active material, and the conductive additive is the same as that described above for the negative electrode for a lithium secondary battery.

In addition, examples of the binder may include PVDF, PVA, PAA, PMA, PMMA, PAM, polymethacrylamide, PAN, polymethacrylonitrile, PI, chitosan, starch, hydroxypropylcellulose, regenerated cellulose, polyvinylpyrrolidone, tetrafluoroethylene, polyethylene, polypropylene, EPDMs, sulfonated-EPDMs, SBR, fluoroelastomers, various copolymers thereof, and the like, but are not limited thereto.

While the separator may be made of a porous substrate, any porous substrate commonly used in electrochemical devices is usable as the porous substrate, and examples thereof used may include a polyolefin-based porous membrane or non-woven fabric, but are not particularly limited thereto.

The separator may be a porous substrate made of any one or a mixture of two or more selected from the group consisting of polyethylene, polypropylene, polybutylene, polypentene, polyethylene terephthalate, polybutylene terephthalate, polyester, polyacetal, polyamide, polycarbonate, PI, polyetheretherketone, polyethersulfone, polyphenylene oxide, polyphenylene sulfide, and polyethylene naphthalate.

The electrolyte solution of the lithium secondary battery, which is a non-aqueous electrolyte solution containing lithium salt, is composed of a solvent and lithium salt. As the solvent, a non-aqueous organic solvent, an organic solid electrolyte, an inorganic solid electrolyte, and the like are used.

Examples of the lithium salt, a material that is easily dissolved in the non-aqueous electrolyte solution, used may include LiCl, LiBr, LiI, $LiClO_4$, $LiBF_4$, $LiB_{10}Cl_{10}$, $LiPF_6$, $LiAsF_6$, $LiSbF_6$, $LiAlCl_4$, LiSCN, $LiC_4BO_8$, $LiCF_3CO_2$, $LiCH_3SO_3$, $LiCF_3SO_3$, $LiN(SO_2CF_3)_2$, $LiN(SO_2F)_2$, $LiN(SO_2C_2F_5)_2$, $LiC_4F_9SO_3$, $LiC(CF_3SO_2)_3$, $(CF_3SO_2)\cdot 2NLi$, lithium chloroborane, lithium lower aliphatic carboxylate, lithium 4-phenyl borate imide, and the like.

Examples of the non-aqueous organic solvent used may include aprotic organic solvents, such as N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyl tetrahydrofuran, dimethylsulfoxide, 1,3-dioxolane, 4-methyl-1,3-dioxene, diethylether, formamide, dimethylformamide, dioxolane, acetonitrile, nitromethane, methylformate, methylacetate, phosphoric acid triester, trimethoxy methane, dioxolane derivatives, sulfolane, methylsulfolane, 1,3-dimethyl-2-imidazolidinone, propylene carbonate derivatives, tetrahydrofuran derivatives, ether, methyl propionate, and ethyl propionate.

Examples of the organic solid electrolyte used may include polyethylene derivatives, polyethylene oxide derivatives, polypropylene oxide derivatives, phosphoric acid ester polymers, poly agitation lysine, polyester sulfide, PVA, PVDF, polymers containing secondary dissociation groups, and the like.

Examples of the inorganic solid electrolyte used may include nitrides, halides, sulfates, and the like of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, and the like.

In addition, the non-aqueous electrolyte solution may further include other additives for the purposes of improving the charge and discharge characteristics, flame retardancy, and the like. Examples of the additives may include pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), vinylene carbonate (VC), and the like.

The lithium secondary battery, according to the present disclosure, may be subjected to folding and lamination stacking processes of the separator and the electrodes, in addition to a typical winding process. Additionally, a case of the battery may be cylindrical, prismatic, pouch-type, or coin-type.

## Mode for Invention

Hereinafter, the present application will be described in more detail using examples, but the present application is not limited thereto.

### [Preparation Example 11 Preparation of First Copolymer

Ethylenediaminetetraacetic acid (EDTA) and 1.3 L of distilled water were added to a reactor into which nitrogen was blown, followed by raising the temperature to 60°C. An initiator and a mixed solution of monomers were added to the reactor, which had reached the temperature of 60°C, and were allowed to react, thereby preparing a first copolymer (PAA-PMA-PAM).

In the meantime, the initiator was prepared by dissolving 0.1 g of an azo initiator in 60 g of distilled water.

In addition, acrylic acid (AA), methacrylic acid (MA), and acrylamide (AM) were mixed in a weight ratio of 7:1:2, respectively, so that the total solid content was 15 wt% or less, thereby preparing the mixed solution of the monomers.

The prepared first copolymer had a weight average molecular weight measured by gel permeation chromatography (GPC) of about 700,000.

### [Preparation Example 21 Preparation of Second Copolymer

EDTA, 1 L of distilled water, and 60 g of vinyl pyrrolidone (VP) were added to a reactor into which nitrogen was blown, followed by raising the temperature to 60°C. An initiator and a mixed solution of monomers other than the pre-introduced VP were added to the reactor, which had reached the temperature of 60°C, and were allowed to react, thereby preparing a second copolymer (polyvinylpyrrolidone (PVP)-polyhydroxyethyl acrylate (PHEA)-PAM).

In the meantime, the initiator was prepared by dissolving 0.075 g of an azo initiator in 45 g of distilled water.

The mixed solution of the monomers other than PVP was prepared by mixing 60 g and 30 g of hydroxyethyl acrylate (HEA) and AM, respectively.

In other words, the weight ratio of VP, HEA, and AM in the second copolymer was 4:4:2.

The prepared first copolymer had a weight average molecular weight, measured by GPC, of about 700,000.

### [Preparation Example 3] Manufacture of Lithium Secondary Battery

Based on 100 parts by weight of the total weight of the solid content in a slurry, 77.56 parts by weight of graphite and 19.39 parts by weight of SiC as electrode active materials, 0.05 parts by weight of single-walled carbon nanotubes (SWCNTs) as a conductive additive, and 3 parts by weight of a binder including the first copolymer prepared by Preparation Example 1 and the second copolymer prepared by Preparation Example 2 were mixed. Then, distilled water was added to the resulting mixture, thereby preparing a negative electrode slurry, in which case the solid content in the slurry was adjusted to be in the range of 20 wt% to 80 wt%.

The prepared negative electrode slurry was uniformly applied on a copper current collector. The resulting compound, which was then dried at a temperature of 110°C, was rolled using a roll press and thermally treated in a vacuum oven at a temperature of 110°C for 4 hours or more, thereby preparing a negative electrode.

Afterward, a non-aqueous electrolyte solution containing lithium salt was used as an electrolyte, and a polyolefin separator was interposed between a positive electrode and the negative electrode. Then, a lithium secondary battery was manufactured without distinguishing the form into a pouch or coin cell type.

The non-aqueous electrolyte used was prepared by adding 5 wt% of FEC and 1 wt% of $LiP_2FP$ to a solvent in which ethylene carbonate, ethylmethyl carbonate, and diethyl carbonate were mixed in a volume ratio of 2:1:7 and dissolving a $LiPF_6$ electrolyte at a concentration of 1.5 M.

### [Example 11

A lithium secondary battery was manufactured according to Preparation Example 3 using a binder in which the first copolymer prepared by Preparation Example 1 and the second copolymer prepared by Preparation Example 2 were mixed in a weight ratio of 40:60 (wt% of the first copolymer:wt% of the second copolymer).

### [Example 2]

A lithium secondary battery was manufactured in the same manner as in Example 1, except that the weight ratio of the first copolymer to the second copolymer (wt% of the first copolymer:wt% of the second copolymer) was set to 50:50.

**[Example 3]**

A lithium secondary battery was manufactured in the same manner as in Example 1, except that the weight ratio of the first copolymer to the second copolymer (wt% of the first copolymer:wt% of the second copolymer) was set to 60:40.

**[Comparative Example 11**

A lithium secondary battery was manufactured in the same manner as in Example 1, except for using PAA alone instead of the composition made of the first copolymer and the second copolymer. The PAA had a weight average molecular weight, measured by GPC, of about 100,000.

The PAA used in Comparative Example 1 was prepared as follows: EDTA and 1 L of distilled water were added to a reactor into which nitrogen was blown, followed by raising the temperature to 60°C, and then AA and an initiator solution in which 0.0055 g of an azo initiator is dissolved in 45 g of distillation were introduced and allowed to react.

**[Comparative Example 2]**

A lithium secondary battery was manufactured in the same manner as in Example 1, except for using the binder made of the first copolymer alone (second copolymer-free binder).

**[Comparative Example 3]**

A lithium secondary battery was manufactured in the same manner as in Example 1, except for using the binder made of the second copolymer alone (first copolymer-free binder).

The weight ratios of the first copolymer to the second copolymer used in Examples 1 to 3 and Comparative Examples 1 to 3 are shown in Table 1 below.

[Table 1]

| | Weight ratio of first copolymer to second copolymer (weight of first copolymer:weight of second copolymer) |
|---|---|
| Example 1 | 40:60 |
| Example 2 | 50:50 |
| Example 3 | 60:40 |
| Comparative Example 1 | Using PAA alone |
| Comparative Example 2 | 100:0 |
| Comparative Example 3 | 0:100 |

**[Evaluation Example 1] Rheological Property Evaluation of Negative Electrode Slurry**

The rheological properties of the negative electrode slurries used to manufacture the lithium secondary batteries of Examples 1 to 3 and Comparative Examples 1 to 3 were measured at a temperature of 25°C using a rheometer.

During the measurement, distilled water was used as a solvent, and the content of the copolymers was adjusted to 6 wt%.

As a result of the measurements, as shown in FIG. 1, shear thinning, a phenomenon in which the viscosity decreased as the shear rate increased, was observed in the case of the negative electrode slurries of Examples 1 to 3, using the compositions made of the first copolymer and the second copolymer.

In contrast, a section where the viscosity decreased as the shear rate increased but then increased again was observed in the case of the negative electrode slurry of Comparative Example 1, using the PAA polymer alone. Such an increase in the viscosity may cause deterioration of coating properties.

In the meantime, it was confirmed that compared to the case of the negative electrode slurries of Examples 1 to 3, using the compositions made of the first copolymer and the second copolymer, the viscosity at low shear rates decreased in the case of the negative electrode slurry of Comparative Example 2, using the first copolymer alone. The low viscosity at such low shear rates may cause deterioration of binder stability.

It was also confirmed that the viscosity change with varying shear rates was extremely insignificant in the case of the negative electrode slurry of Comparative Example 3, using the second copolymer alone.

**[Evaluation Example 2] Battery Performance Evaluation**

Three cycles of charge and discharge were performed on the lithium secondary batteries manufactured in Examples 1 to 3 and Comparative Examples 1 to 3 at a temperature of 25°C under the following conditions: a charge and discharge current density of 0.1 C, a charge cut-off voltage level of 4.8 V, and a discharge cut-off voltage level of 2.7 V.
Then, the capacity retention rate was measured by performing 50 cycles of charge and discharge under the following conditions: a charge and discharge current density of 1 C, a charge cut-off voltage level of 4.8 V, and a discharge cut-off voltage level of 2.7 V.
All discharges were performed under constant current and constant voltage conditions, with the cut-off current level for the constant-voltage discharge set to 0.005 C.
In this case, the capacity retention rate was calculated according to Equation 1 below.

Capacity retention rate (%) = (discharge capacity after 50 cycles/discharge capacity after 3 cycles) * 100 [Equation 1]

In addition, after the completion of charge and discharge evaluation, cells were disassembled to check thickness changes in the negative electrodes, thereby comparing the effect of the binders used in Examples 1 to 3 and Comparative Examples 1 to 3 in suppressing silicon expansion.
In this case, the thickness change rate was calculated according to Equation 2 below.

Electrode expansion rate (%) = (thickness of negative electrode after 50 cycles - thickness of vacuum-dried negative electrode before assembly)/thickness of vacuum-dried negative electrode before assembly * 100 [Equation 2]

The capacity retention rates of the batteries and the electrode expansion rates, measured in Evaluation Examples 2 and 3, are shown in Table 2 below.

[Table 2]

| | Capacity retention rate after 50 cycles (%) | Electrode expansion rate after 50 cycles (%) |
|---|---|---|
| Example 1 | 73.8 | 27 |
| Example 2 | 77.3 | 26 |
| Example 3 | 86.0 | 25 |
| Comparative Example 1 | 45.7 | 104 |
| Comparative Example 2 | 55.7 | 84 |
| Comparative Example 3 | 36.7 | 128 |

In the meantime, the capacity retention rates of the lithium secondary batteries in the case of Examples 1 to 3, using the binders in which the first copolymer and the second copolymer were mixed in the predetermined ratios, were measured to be 70% or higher after 50 cycles.
In addition, in terms of the weight ratio of the first copolymer to the second copolymer, the higher the proportion of the first copolymer, the higher the capacity retention rate of the lithium secondary battery measured.
In contrast, in the case of Comparative Example 1, using the PAA polymer alone as the binder, the capacity retention rate of the lithium secondary battery was measured as 45.7% after 50 cycles.
Furthermore, in the case of Comparative Examples 2 and 3, using either the first copolymer or the second copolymer alone as the binder, the capacity retention rates of the lithium secondary batteries after 50 cycles were measured as 55.7% and 36.7%, respectively.
In other words, it was confirmed that when using the binders in which the first copolymer and the second copolymer were mixed in the predetermined ratios, the capacity retention rates of the lithium secondary batteries were high compared to when using the PAA polymer, the first copolymer, or the second copolymer alone as the binder, and the lithium secondary batteries had improved life characteristics.
When it comes to the electrode expansion rate of the lithium secondary batteries after 50 cycles, it was confirmed that in the case of Examples 1 to 3, using the binders in which the first copolymer and the second copolymer were mixed in

the predetermined ratios, the electrode expansion rate was suppressed to 30% or lower.

In contrast, in the case of Comparative Example 1, using the PAA polymer alone as the binder, the electrode expansion rate was extremely high at 104% after 50 cycles.

Furthermore, in the case of Comparative Examples 2 and 3, using either the first copolymer or the second copolymer alone as the binder, the electrode expansion rates of the lithium secondary batteries after 50 cycles were extremely high at 84% and 128%, respectively.

The high electrode expansion rate may shorten the lithium secondary battery life and cause serious failures such as ignition.

In other words, when using the binder made of either the first copolymer or the second copolymer alone, the capacity retention rates of the lithium secondary batteries may be reduced compared to when using the binders in which the first copolymer and the second copolymer were mixed in the predetermined ratios, and the electrode expansion rate may increase, leading to deterioration of battery properties.

As a result, it was confirmed that the copolymer binder compositions of the present application, in which the first copolymer and the second copolymer were mixed in the predetermined ratios, had appropriate ranges of the rheological properties of the negative electrode slurry composition and secondary battery properties.

In the meantime, it was seen that when using either the first copolymer or the second copolymer alone as the binder or using the existing polymer as the binder, one or more of the rheological properties of the negative electrode slurry composition, negative electrode expansion rate, and secondary battery properties were inappropriate for use in actual secondary batteries.

The scope of the present disclosure is defined by the appended claims rather than the detailed description presented above. All changes or modifications derived from the meaning and scope of the claims and the concept of equivalents should be construed to fall within the scope of the present disclosure.

## Industrial Applicability

A copolymer composition of the present disclosure has excellent flexibility, thus improving the coating properties and rheological properties of a negative electrode slurry composition, and can suppress negative electrode expansion, resulting in improved secondary battery life.

## Claims

**1.** A copolymer composition comprising:

a first copolymer comprising an acrylic acid-based monomer unit and an acrylamide-based monomer unit; and
a second copolymer comprising a vinyl pyrrolidone-based unit, an acrylate-based monomer unit containing a hydroxyl group, and an acrylamide-based monomer unit.

**2.** The copolymer composition of claim 1, wherein the acrylic acid-based monomer unit of the first copolymer is formed by polymerizing an acrylic acid monomer, a methacrylic acid monomer, or a combination thereof,

the acrylamide-based monomer unit of the first copolymer is formed by polymerizing an acrylamide monomer, a methacrylamide monomer, or a combination thereof,
the acrylate-based monomer unit containing the hydroxyl group of the second copolymer is formed by polymerizing a 2-hydroxyethyl acrylate monomer, a 2-hydroxyethyl methacrylate monomer, or a combination thereof, and
the acrylamide-based monomer unit of the second copolymer is formed by polymerizing an acrylamide monomer, a methacrylamide monomer, or a combination thereof.

**3.** The copolymer composition of claim 1, wherein the first copolymer comprises 75 wt% or more and 95 wt% or less of the acrylic acid-based monomer unit and 5 wt% or more and 25 wt% or less of the acrylamide-based monomer unit, based on 100 wt% of the total weight of the first copolymer.

**4.** The copolymer composition of claim 1, wherein the second copolymer comprises 30 wt% or more and 50 wt% or less of the vinyl pyrrolidone-based monomer unit, 30 wt% or more and 50 wt% or less of the acrylate-based monomer unit containing the hydroxyl group, and 10 wt% or more and 30 wt% or less of the acrylamide-based monomer unit, based on 100 wt% of the total weight of the second copolymer.

5. The copolymer composition of claim 1, wherein the acrylic acid-based monomer unit of the first copolymer is formed by polymerizing an acrylic acid monomer and a methacrylic acid monomer in a weight ratio (weight of the acrylic acid monomer:weight of the methacrylic acid monomer) in a range of 2 to 10: 1.

6. The copolymer composition of claim 1, wherein the first copolymer comprises a monomer repeating unit represented by Formula 1 below, and

the second copolymer comprises a monomer repeating unit represented by Formula 2 below,

[Formula 1]

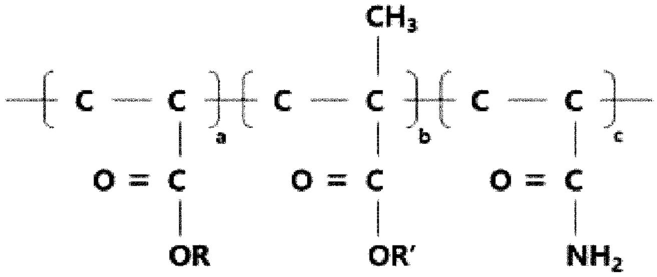

where in Formula 1, R and R' are each independently hydrogen, an alkali metal, or a combination thereof, and

$$a + b + c = 1,$$

and

[Formula 2]

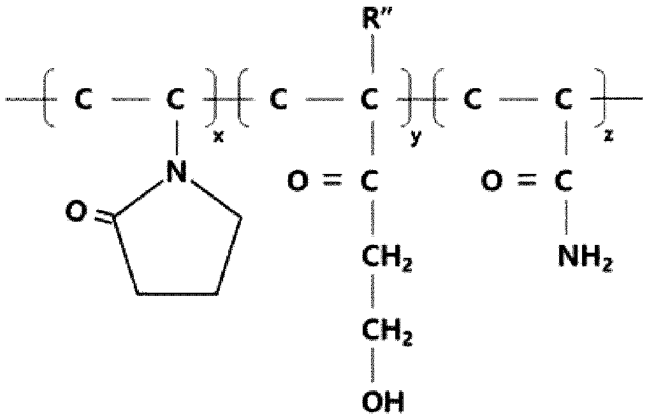

in Formula 2, R" is hydrogen, methyl, or a combination thereof, and

$$x + y + z = 1.$$

7. The copolymer composition of claim 1, wherein the copolymer composition, based on 100 wt% of the total weight thereof, comprises 10 wt% or more and 90 wt% or less of the first copolymer and 10 wt% or more and 90 wt% or less of the second copolymer.

8. The copolymer composition of claim 1, wherein the first copolymer is a random or block copolymer, and the second copolymer is a random or block copolymer.

9. The copolymer composition of claim 1, wherein the first copolymer has a weight average molecular weight of 10,000 or more and 1,000,000 or less, and the second copolymer has a weight average molecular weight of 10,000 or more and 1,000,000 or less.

**10.** A negative electrode slurry comprising:

the copolymer composition of any one of claims 1 to 9; and
a negative electrode active material.

**11.** A negative electrode comprising:

a current collector; and
a negative electrode active material layer comprising the copolymer composition of any one of claims 1 to 9, the negative electrode active material layer formed on the current collector.

**12.** A secondary battery comprising:
the negative electrode of claim 11.

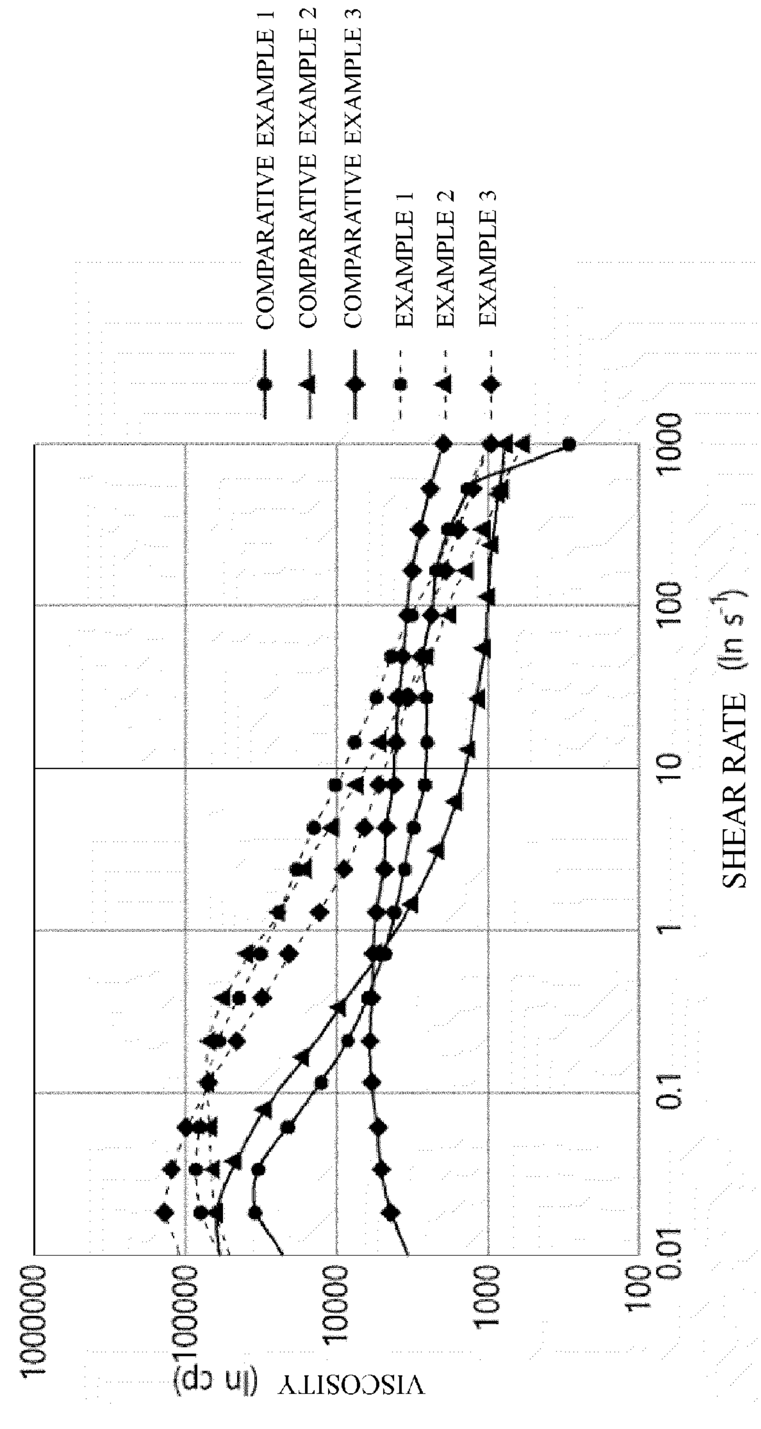
COMPARATIVE EXAMPLE 1
COMPARATIVE EXAMPLE 2
COMPARATIVE EXAMPLE 3
EXAMPLE 1
EXAMPLE 2
EXAMPLE 3
VISCOSITY (ln cp)
1000000
100000
10000
1000
100
0.01
0.1
1
10
100
1000
SHEAR RATE (ln $s^{-1}$)

FIG. 1

## INTERNATIONAL SEARCH REPORT

International application No.
**PCT/KR2023/015412**

**A. CLASSIFICATION OF SUBJECT MATTER**

**H01M 4/62**(2006.01)i; **H01M 4/587**(2010.01)i; **H01M 4/583**(2010.01)i; **H01M 10/0525**(2010.01)i; **C08L 33/02**(2006.01)i; **C08L 33/06**(2006.01)i; **C08L 33/26**(2006.01)i; **C08L 39/06**(2006.01)i; **C08L 53/00**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); C08F 212/14(2006.01); C08F 220/18(2006.01); C08J 3/24(2006.01); C08J 5/22(2006.01); H01M 10/052(2010.01); H01M 10/0525(2010.01); H01M 2/16(2006.01); H01M 4/583(2010.01); H01M 8/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공중합체 조성물(copolymer composition), 아크릴산(acrylic acid), 아크릴아마이드(acrylamide), 비닐 피롤리돈(vinyl pyrrolidone), 아크릴레이트(acrylate), 단량체(monomer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2432637 B1 (HANSOL CHEMICAL CO., LTD.) 17 August 2022 (2022-08-17)<br>See claims 1 and 9-13; and paragraphs [0077] and [0092]. | 1-12 |
| Y | KR 10-2018-0048778 A (SHENZHEN BTR NEW ENERGY MATERIALS INC.) 10 May 2018 (2018-05-10)<br>See claims 1 and 6; and paragraph [0008]. | 1-12 |
| A | JP 2006-024552 A (MITSUBISHI GAS CHEM. CO., INC.) 26 January 2006 (2006-01-26)<br>See entire document. | 1-12 |
| A | JP 2006-156041 A (NATIONAL INSTITUTE OF ADVANCED INDUSTRIAL & TECHNOLOGY) 15 June 2006 (2006-06-15)<br>See entire document. | 1-12 |
| A | JP 6016757 B2 (ASAHI KASEI E-MATERIALS CORP.) 26 October 2016 (2016-10-26)<br>See entire document. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/015412**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2538285 B1 (HANSOL CHEMICAL CO., LTD.) 01 June 2023 (2023-06-01)<br>See claims 1-2 and 5-12.<br>※This document is the published patent of an earlier application that serves as a basis for claiming priority of the present international application. | 1-12 |

Form PCT/ISA/210 (second sheet) (July 2022)

**INTERNATIONAL SEARCH REPORT**
**Information on patent family members**

International application No.
**PCT/KR2023/015412**

| Patent document cited in search report | Publication date (day/month/year) | Patent family member(s) | Publication date (day/month/year) |
|---|---|---|---|
| KR 10-2432637 B1 | 17 August 2022 | WO 2023-177169 A1 | 21 September 2023 |
| KR 10-2018-0048778 A | 10 May 2018 | CN 105131875 A | 09 December 2015 |
| | | CN 105131875 B | 07 July 2017 |
| | | JP 2018-527710 A | 20 September 2018 |
| | | JP 6667617 B2 | 18 March 2020 |
| | | KR 10-2105380 B1 | 29 April 2020 |
| | | US 10777818 B2 | 15 September 2020 |
| | | US 2018-0248191 A1 | 30 August 2018 |
| | | WO 2017-032320 A1 | 02 March 2017 |
| JP 2006-024552 A | 26 January 2006 | None | |
| JP 2006-156041 A | 15 June 2006 | None | |
| JP 6016757 B2 | 26 October 2016 | JP 2015-103482 A | 04 June 2015 |
| KR 10-2538285 B1 | 01 June 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020160024921